# EUROPÄISCHE PATENTANMELDUNG

(11) **EP 0 829 339 A1**
(43) Veröffentlichungstag der Anmeldung: **18.03.1998**
(21) Anmeldenummer: 97890181.7
(22) Anmeldetag: 11.09.1997
(51) Int. Cl.: B29C 47/90, B29C 47/88

(54) **Verfahren zur Herstellung von Kunststoffprofilen**

(30) Priorität: 13.09.1996 AT 1624/96
(71) Anmelder: Technoplast Kunststofftechnik Gesellschaft m.b.H., 4563 Micheldorf (AT)
(72) Erfinder: Dorninger, Frank, 4563 Micheldorf (AT)
(74) Vertreter: Babeluk, Michael, Dipl.-Ing. Mag., Patentanwälte Babeluk - Krause

(57) **Zusammenfassung**

Die Erfindung betnfft ein Verfahren zur Herstellung von Kunststoffprofilen, bestehend aus den folgenden Schritten:
- Extrudieren eines Kunststoffprofils aus einer Extrusionsdüse (2);
- Kalibrieren des Profils (3) in Kalibrierwerkzeugen (4);
- Abkühlen des Profils (3) in einem Wasserbad (5) oder Sprühbad
- neuerliches Erwärmen des Profils (3)

Die Erfindung ist dadurch gekennzeichnet, daß die Erwärmung durch einen beheizten Kalibrierkörper (10) erfolgt, wobei nur eine dünne Oberflächenschicht an der Außenseite des Profils erwärmt wird. Weiters betrifft die Erfindung eine Vorrichtung zur Durchführung des Verfahrens.

## Beschreibung

Die Erfindung betrifft ein Verfahren zur Herstellung von Kunststoffprofilen, bestehend aus den folgenden Schritten:
- Extrudieren eines Kunststoffprofils aus einer Extrusionsdüse;
- Kalibrieren des Profils in Kalibrierwerkzeugen;
- Abkühlen des Profils in einem Wasserbad oder Sprühbad;
- neuerliches Erwärmen des Profils (3).

Bei einem herkömmlichen Verfahren zur Herstellung von Kunststoffprofilen tritt ein solches Profil in teigigem Zustand aus der Extrusionsdüse aus. Eine erste Abkühlung des Profils erfolgt in den Kalibrierwerkzeugen, die weitere Abkühlung in einem Wasserbad oder Sprühbad. Dabei nimmt die Temperatur des Profils kontinuierlich ab. Durch die Kalibrierwerkzeuge und durch Kalibrierblenden, die im Wasserbad oder Sprühbad vorgesehen sind, wird die genaue Ausbildung der Profilkontur und die Glätte der Profiloberfläche gewährleistet.

Im Zuge der technischen Entwicklung sind jedoch die Anforderungen an die Maßgenauigkeit und an die Güte der Oberfläche ständig gestiegen. Dementsprechend wird der Aufwand zur Erfüllung dieser Bedingungen beständig größer.

Aus der DE-A-32 16 720 ist ein Verfahren zum Extrudieren von Rohren bekannt, bei dem Spannungsdifferenzen, die über den Querschnitt der Rohre bestehen, abgebaut werden sollen. Dieser Abbau von Eigenspannungen ist seit langem bekannt und wird als Tempern bezeichnet. Um den Abbau von Spannungen in einem nennenswerten Umfang tatsächlich durchführen zu können, muß mindestens der überwiegende Teil des Rohrquerschnitts erwärmt werden. Es wird lediglich ein kleinerer Bereich, zumeist an der Rohrinnenseite, auf einer niederen Temperatur gehalten, um die Stabilität des Rohres zu gewährleisten. Eine Verbesserung der Oberflächenqualität kann mit einem solchen Verfahren nicht erreicht werden.

Aufgabe der Erfindung ist es, eine weitere Erhöhung der Profilqualität zu erreichen, wobei gleichzeitig der Herstellungsprozeß einfacher und weniger kritisch gestaltet werden soll.

Diese Aufgabe wird dadurch gelöst, daß die Erwärmung durch einen beheizten Kalibrierkörper erfolgt, wobei nur eine dünne Oberflächenschicht an der Außenseite des Profils erwärmt wird. Wesentlich an der Erfindung ist, daß durch eine scheinbare Verkomplizierung des Herstellungsverfahrens gleichwohl eine Vereinfachung erzielt werden kann. Es hat sich nämlich herausgestellt, daß nach weitgehender Abkühlung des Profils eine Oberflächenbehandlung durch nachträgliche Erwärmung leichter möglich ist, da die Grundstruktur des Profils bereits weitgehend abgekühlt und daher steif ist. Die Vereinfachung, die durch die Erfindung erzielt wird, liegt darin, daß bei der anfänglichen Kalibrierung ein wesentlich niedrigerer Güteanspruch an Maßgenauigkeit und Oberflächenqualität angelegt werden kann, da bei der nachträglichen Erwärmung etwaige Fehler leicht ausgeglichen werden können.

Es ist dabei wichtig, daß die Erwärmung nur in einer dünnen Oberflächenschicht erfolgt. Dabei kann die schon steife Grundstruktur des Profils einen ausreichenden Widerstand gegenüber den Kräften bieten, die zur Kalibrierung des Profils dienen.

In einer vorteilhaften Ausführungsvariante des Verfahren erfolgt die Erwärmung nur in bestimmten Bereichen des Profils. Bei diesen Bereichen handelt es sich klarerweise um die Bereiche, deren Oberflächengüte besonders kritisch ist, also um die späteren Sichtflächen.

Die Erwärmung erfolgt durch Berührung, also über Blenden, Bügelkanten und dgl. Dies ermöglicht die Erzielung verbesserter Ergebnisse, da kein Einlaufen und keine Streifenbildung zu erwarten ist. Die erzielbare Energiedichte ist relativ groß, so daß es möglich ist, nur die Oberfläche selbst zu erwärmen.

Weiters betrifft die Erfindung eine Vorrichtung zur Kalibrierung von Kunststoffprofilen, bestehend aus einer Extrusionsdüse, Kalibrierwerkzeugen und einem Bad zur Abkühlung des Profils, wobei nach dem Bad eine Einrichtung zum Erwärmen und anschließendem Abkühlen des Profils angeordnet ist. Erfindungsgemäß ist diese Vorrichtung dadurch gekennzeichnet, daß die Einrichtung zum Erwärmen des Profils und anschließendem Abkühlen aus einem beheizten Kalibrierkörper und einem weiteren Wasserbad gebildet ist. Das Bad kann dabei als Wasserbad oder als Sprühbad ausgeführt sein.

In einer alternativen Ausführungsvariante kann die Einrichtung zum Erwärmen innerhalb des Wasserbads oder Sprühbads vorgesehen sein. Die Abkühlung nach dem Erwärmungsschritt kann durch ein weiteres Wasserbad oder auch durch ein Gebläse erfolgen.

In der Folge wird die Erfindung anhand der in den Figuren dargestellten Ausführungsbeispielen näher erläutert. Die Figuren zeigen:

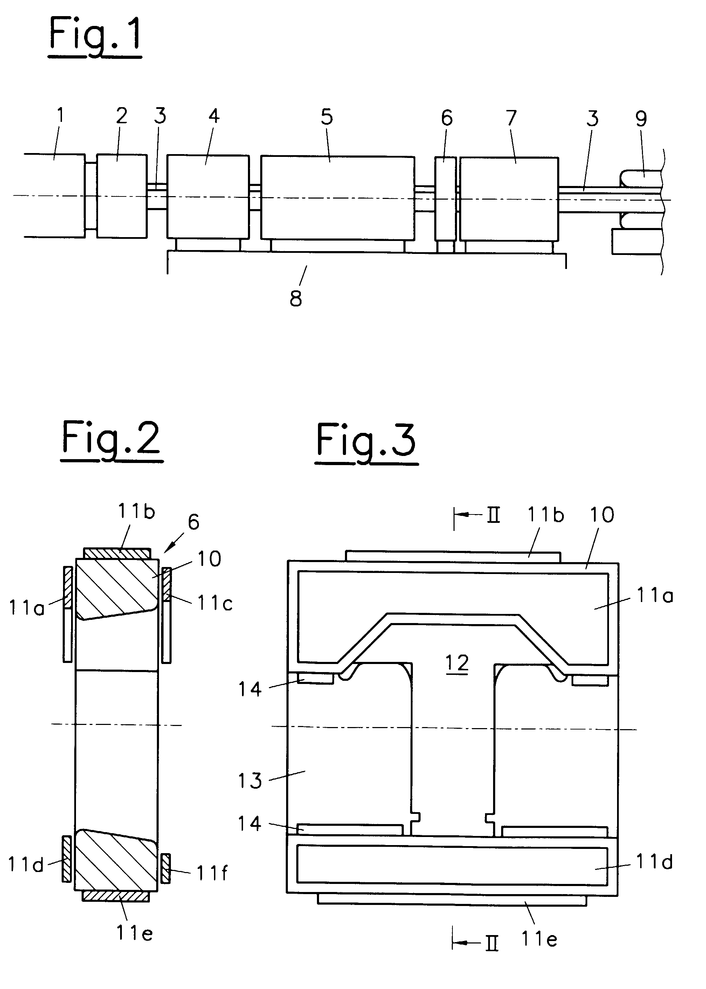

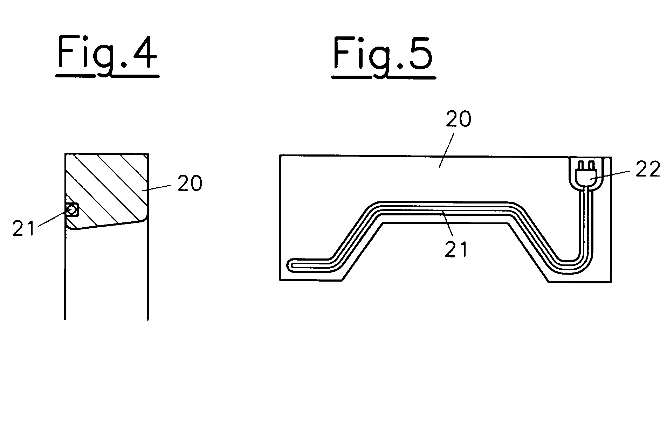

Die Fig. 1 schematisch den Aufbau einer erfindungsgemäßen Extrusionslinie; die Fig. 2 einen Schnitt durch eine erfindungsgemäße Einrichtung zum Erwärmen nach der Linie II-II von Fig. 3; die Fig. 3 eine Ansicht einer Einrichtung zum Erwärmen in der Extrusionsrichtung des Profils; die Fig. 4 und 5 eine Ausführungsvariante der Erfindung in Darstellungen entsprechend den Fig. 2 und 3.

Die Fig. 1 zeigt einen Extruder 1 mit einer Extrusionsdüse 2, aus der ein Extrudat 3 austritt, das in der Folge das zu erzeugende Profil bildet. In einem Kalibrierwerkzeug 4 wird das Profil einer ersten Abkühlung unterworfen und auf die gewünschte Form kalibriert. Im Anschluß daran tritt das Profil in ein Wasserbad 5 ein, in dem eine weitere starke Abkühlung sowie eine genaue Kalibrierung erfolgt. Das Wasserbad 5 kann in an sich bekannter Weise als Vollbad mit oder ohne Turbulenzströmung oder als Sprühbad ausgebildet sein. Nach dem Austritt des Profils aus dem Wasserbad 5 tritt das Profil in eine Erwärmungseinrichtung 6 ein, an die ein weiteres Wasserbad 7 anschließt. Das Kalibrierwerkzeug 4, das Wasserbad 5, die Erwärmungseinrichtung 6 und das weitere Wasserbad 7 sind auf einem Kalibriertisch 8 aufgebaut. Ein Raupenabzug 9 übt eine Zugkraft auf das aus dem weiteren Wasserbad 7 austretende Profil 3 aus.

In den Fig. 2 und Fig. 3 ist die Erwärmungseinrichtung 6 im Detail dargestellt. Sie besteht aus einem Kalibrierkörper 10, der von Heizplatten 11a, 11b, 11c, 11d, 11e und 11f umgeben ist. Diese Heizplatten 11a, 11b, 11c, 11d, 11e und 11f werden mit einer Spannung von 220 V mit Strom versorgt. Der Kalibrierkörper 10 beheizt und kalibriert nur die obere bzw. die untere Fläche des mit 12 angedeuteten Profils, die die Sichtflächen darstellen. In den seitlichen Bereichen des Profils 12 sind Führungen 13 vorgesehen, die durch Freistellungen 14 thermisch vom Kalibrierkörper 10 getrennt sind.

Der Kalibrierkörper 10 ist mit PTFE oder Metalloxyden beschichtet, um die Reibung zu minimieren.

Bei der Ausführungsvariante von Fig. 4 und Fig. 5 ist ein Kalibrierkörper 20 mit Nuten versehen, in denen eine Wendel-Heizpatrone eingelegt ist, die mit 12 V versorgt wird. Die Einleitung der elektrischen Energie erfolgt über einen Keramikstecker 22.

## Patentansprüche

1. Verfahren zur Herstellung von Kunststoffprofilen, bestehend aus den folgenden Schritten:
- Extrudieren eines Kunststoffprofils aus einer Extrusionsdüse (2);
- Kalibrieren des Profils (3) in Kalibrierwerkzeugen (4);
- Abkühlen des Profils (3) in einem Bad (5);
- neuerliches Erwärmen des Profils (3),
dadurch gekennzeichnet, daß die Erwärmung durch einen beheizten Kalibrierkörper (10) erfolgt, wobei nur eine dünne Oberflächenschicht an der Außenseite des Profils erwärrnt wird.

2. Verfahren nach Anspruch 1, dadurch gekennzeichnet, daß die Erwärmung nur in bestimmten Bereichen des Profilumfangs erfolgt.

3. Vorrichtung zur Kalibrierung von Kunststoffprofilen, bestehend aus einer Extrusionsdüse (2), Kalibrierwerkzeugen (4) und einem Bad (5) zur Abkühlung des Profils (3), wobei nach dem Bad (5) eine Einrichtung zum Erwärmen und anschließendem Abkühlen des Profils angeordnet ist, dadurch gekennzeichnet, daß die Einrichtung zum Erwärmen des Profils und anschließenden Abkühlen aus einem beheizten Kalibrierkörper (10) und einem weiteren Wasserbad (7) gebildet ist.

4. Vorrichtung zur Kalibrierung von Kunststoffprofilen, bestehend aus einer Extrusionsdüse (2), Kalibrierwerkzeugen (4) und einem Bad (5) zur Abkühlung des Profils (3), wobei nach dem Bad (5) eine Einrichtung zum Erwärmen und anschließendem Abkühlen des Profils angeordnet ist, dadurch gekennzeichnet, daß die Einrichtung zum Erwärmen und anschließenden Abkühlen des Profils aus einem beheizten Kalibrierkörper (10) und einem Gebläse gebildet ist.

5. Vorrichtung zur Kalibrierung von Kunststoffprofilen, bestehend aus einer Extrusionsdüse (2), Kalibrierwerkzeugen (4) und einem Bad (5) zur Abkühlung des Profils, wobei im Bad (5) eine Einrichtung zum Erwärmen des Profils und anschließendem Abkühlen vorgesehen ist, dadurch gekennzeichnet, daß die Einrichtung zum Erwärmen des Profils und anschließendem Abkühlen aus einem beheizten Kalibrierkörper (10) und einem weiteren Wasserbad (7) gebildet ist.
